# EUROPÄISCHE PATENTANMELDUNG

(11) **EP 0 525 254 A1**
(43) Veröffentlichungstag der Anmeldung: **03.02.1993**
(21) Anmeldenummer: 91250208.5
(22) Anmeldetag: 25.07.1991
(51) Int. Cl.: B07C 3/08, B61C 13/00, B64F 1/32, B65G 47/38, B65G 47/96

(54) **Schienen-Förderer, insbesondere Unstetigförderer für Stückgut**

(71) Anmelder: Bernhard Beumer Maschinenfabrik KG, D-59269 Beckum (DE)
(72) Erfinder: Pölling, Ludger, W-4724 Wadersloh/Diestedde (DE)
(74) Vertreter: Hoormann, Walter, Dr.-Ing.

(57) **Zusammenfassung**

Die Erfindung betrifft einen Förderer (1'), insbesondere Unstetigförderer für Stückgut (4), mit einer Schienenführung (2'), längs welcher die einzelne(n) Fördereinheit(en) (1') gesteuert selbstfahrend entlangzubewegen ist (sind), und mit (wenigstens) einer Abgabestation (10), an welcher das von einem Fördermittel (1') transportierte Gut (4) (gesteuert) abzugeben ist, wobei ein/das Fördermittel (1') - vorzugsweise an seiner Oberseite - mit einem Kipp-Förderelement (1) versehen ist.

## Beschreibung

Die Erfindung betrifft einen Förderer, insbesondere einen Unstetigförderer für Stückgut, mit einer - ggf. diverse Weichen aufweisenden - Schienenführung, längs welcher die einzelne(n) Fördereinheit(en) gesteuert selbstfahrend entlangzubewegen ist (sind), und mit (wenigstens) einer Abgabestation, an welcher das von dem/einem Fördermittel transportierte Fördergut (gesteuert) abzugeben ist.

Es sind im Rahmen der Förder- bzw. Verteiltechnik u.a. auch kurz als Sorter bezeichnete Anlagen bekannt, bei denen die Stückgutteile an wenigstens einer Aufgabestelle (häufig jedoch auch an mehreren Aufgabenstellen) so aufgegeben werden, daß sie jeweils auf der im Förderzustand im wesentlichen horizontalen Tragfläche eines Förderelementes plaziert werden.

Wenn vor- oder nachstehend davon die Rede ist, daß die Tragfläche der Förderelemente im Förderzustand "im wesentlichen" horizontal ist, so soll dieses zum Ausdruck bringen, daß die Tragfläche ggf. auch schalenförmig gekrümmt oder abgewinkelt sein kann. Der Förderstrang kann in einer horizontalen Ebene verlaufen, jedoch auch schräg zur Horizontalen bzw. raumgängig, wobei dafür Sorge zu tragen ist, daß die Stückgutteile nicht ungewollt von den Tragflächen heruntergleiten.

Die wesentliche Aufgabe von Sortern besteht darin, die Stückgutteile jeweils an einer von mehreren seitlich zur Förderbahn angeordneten Abgabestationen abzugeben, um sie nach bestimmten Kriterien zu sortieren. Dieses kann bei Postpaketen bspw. eine Sortierung nach Postleitzahlen sein oder bei einem auf einem Flughafen eingesetzten Sorter eine Sortierung von aufgegebenen Gepäckstücken nach dem Flugziel od.dgl. Dabei werden die Stückgutteile im allgemeinen vor ihrer Aufgabe auf den Sorter mit einer Kodierung versehen oder sie weisen von vornherein eine Kennzeichnung auf, die nach ihrer Aufgabe von einer Leseeinrichtung lesbar ist, wobei die Kodierung bzw. Kennzeichnung einer bestimmten Aufgabestation zugeordnet ist, und durch bestimmte Einrichtungen dafür gesorgt wird, daß ein einer bestimmten Abgabestation zugeordnetes Stückgutteil an dieser seitlich von dem Sorter abgegeben wird und an der betreffenden Abgabestelle - im allgemeinen über eine Rutsche - auf einen Förderer mit quer zum Sorter verlaufender Fördereinrichtung gelangt, von dem es zur Weiterbehandlung fortgefördert wird.

Es sind im Rahmen der (eine Unzahl unterschiedlicher Förderer bzw. Fördersysteme umfassenden) Fördertechnik weiterhin u.a. sog. (Elektro-)Hängebahnen bekannt, bei denen eine sog. Einschienenlaufkatze (meist mit Elektrofahrwerk) direkt auf (wenigstens) einer Kranschiene od.dgl. zu verfahren ist (bei kurzen Fahrwegen kann die Laufkatze auch durch Drücken bzw. Ziehen an der Last fortbewegt werden), wobei es sich bei den (Einschienen-)Laufkatzen um Hänge laufkatzen handelt, also um solche Laufkatzen, deren Ladegeschirr (wie bspw. ein Lasthaken od.dgl.) von der (unterhalb der betreffenden Schiene befindlichen/verfahrbaren) Laufkatze nach unten hängt.

Diese Hängebahnen besitzen eine relativ große Freizügigkeit der Streckenführung, so daß die Kombination mit Hängekranen vielfältige Förderaufgaben erfüllen kann, wobei in der Streckenführung eine mehr oder weniger beliebige Anzahl von Weichen (bei einfachen Abzweigungen in der Art von Schiebe- oder Klappweichen; bei mehrfachen Abzweigungen auch Drehweichen) in Frage kommt, die entweder von Hand oder aber auch mittels Fernsteuerung, Kodierung o.ä. betätigbar sein kann (können).

Die vorliegende Erfindung betrifft einen Förderer (genauer gesagt ein Fördersystem), der - wenn man so will - (technisch) zwischen den beiden vorgenannten Förderergattungen "liegt", dabei indes anwendungstechnisch wohl mehr der sog. Verteiltechnik zuzuordnen ist, wie sie seit einiger Zeit nicht nur bei Postanlagen, groben Versandhäusern od.dgl. üblich sind, sondern zunehmend auch in verstärktem Umfange bei den Gepäckanlagen von Flughäfen od.dgl. zum Einsatz kommen.

Wenngleich im Stand der Technik derartige gattungsgemäße Sorteranlagen (einschl. ihrer Aufgabevorrichtungen etc.) eine zwischenzeitlich kaum noch wegzudenkende Rolle spielen, dürfte ihre Anwendung aus sich dem zuständigen Fachmann ohne weiteres erschließenden Gründen mehr oder weniger auf relativ kurze Förderstrecken beschränkt sein.

Es gibt indes diverse Förderproblematiken, für welche die Fördertechnik - trotz eines entsprechenden Bedarfs - bisher - auch mit den beiden vorstehend beispielhaft genannten Förderergattungen - noch keine technisch und wirtschaftlich befriedigenden Lösungen geschaffen hat.

Hierbei handelt es sich bspw. um die (fördertechnische) Problematik der Handhabung von Fluggepäck. Dieses wird bekanntlich - selbst bei dem zwischenzeitlich auf geradezu astronomische Größen angewachsenen Bedarfsumfang - bspw. nach der Landung eines Flugzeuges in mehr als antiquierter Weise von Hand (!) (allenfalls mit Hilfe einfachster Förderbänder) aus dem Flugzeug in/auf verfahrbare Transportgestelle oder Kraftfahrzeuge verladen, von diesen erneut (von Hand!) auf irgendwelche Förderbandsysteme und letztlich auf die jedem Flugreisenden bekannten Fluggepäck-Ausgabeförderer übergeben.

Die gleiche Problematik findet "in umgekehrter Richtung" statt, wobei diese möglicherweise noch antiquierter ist, wenn man einmal bedenkt, daß bspw. auf Flughäfen wie Schipohl höchst moderne HI-Tech-Förder- und Verteilanlagen (mit höchster EDV-Intelligenz) zur Verfügung stehen, die es bspw. einem früh an einem Tage ankommenden Passagier ermöglichen, seinen Koffer für eine Abendmaschine zu irgendeinem Zielflughafen aufzugeben, diesen Koffer selbsttätig auf Lager geben, rechtzeitig vor der Abflug- bzw. Einchecktime wieder abrufen etc., und wenn man dann weiterhin bedenkt, daß diesen hoch-intelligenten Fördersystemen letztlich - wie oben beschrieben - ein Förder-Endsystem nachgeschaltet ist, wie man es bereits im alten Ägypten praktiziert hat.

Nach Auffassung der Anmelderin wäre es nicht nur "denkbar", sondern (bereits seit langem) konsequent, diese "internen" hoch-intelligenten Stückgut-Lager- und Verteileinrichtungen in ihrem Wirkungsgrad nicht durch "externe Nadelöhre" zu beschränken, sondern gleichsam ihre "Logistik" extern bis zu den jeweiligen Flugzeugen (oder Sammelstellen für bestimmte Flugzeuggruppen) mittels geeigneter Förderer weiterzutragen.

Der vorliegenden Erfindung liegt demgemäß die Aufgabe zugrunde, einen Förderer bzw. ein Fördersystem zu schaffen, mit dem die vorstehend beispielhaft angedeutete Aufgabe, aber auch eine Vielzahl/Unzahl weiterer vergleichbarer Aufgaben in technisch und wirtschaftlich befriedigender Weise zu lösen ist.

Die Lösung dieser Aufgabe besteht erfindungsgemäß darin, daß ein/das Fördermittel - vorzugsweise an seiner Oberseite - mit einem Kipp-Förderelement versehen ist.

Hierdurch wird es (erfindungsgemäß) möglich, die (Basis-)Vorteile von Sorteranlagen o.ä. auch für Lang- bzw. Mittelstreckenförderer (der erfindungsgemäßen Art) (zumindest im wesentlichen) voll nutzbar zu machen, d.h. also insbesondere für Stückgut bestimmte Fördersysteme zu schaffen, mittels derer bspw. ein Koffer eines Flugpassagiers, den dieser auf irgendeinem Flufhafen frühmorgens aufgegeben hat (weil er gegen Abend eine bestimmte Maschine erreichen muß), letztlich vollautomatisch aus dem Gepäck-Bevorratungssystem wieder auszuschleusen, indes nicht - wie bisher - an eine geradezu "archaische Gepäckverladestelle", an welcher der Koffer von Hand auf verfahrbares Transportgestell o.ä. verladen wird, sondern mittels dessen dieser Koffer aus dem hoch-intelligenten Gepäck-Bevorratungssystem in ein ebenfalls hoch-intelligentes weiteres Fördersystem eingeschleust wird, welches ihn entweder unmittelbar zu dem betreffenden Flugzeug oder aber zu einer dem betreffenden Flugzeug vorpositionierten Sammelstelle befördert, die den bisherigen Stationen örtlich und organisatorisch nachgeordnet ist.

Erfindungsgemäß ist bevorzugt vorgesehen, daß das/jedes Förderelement mit einem eigenen Antrieb versehen ist, und zwar bevorzugt mit einem (fern-)steuerbaren Antrieb bzw. einer eigenen (Teil-)Steuerung, mittels welcher die betreffende Guteinheit (also bspw. und insbesondere ein Stückgutteil wie bspw. einen Koffer) "gezielt" bzw. gesteuert unmittelbar einem Flugzeug oder einer einem Flugzeug vorgeordneten Stückgut-Verteilstation zugeleitet werden kann.

Wie bereits oben dargelegt, könnte man den Erfindungsgedanken retrospektiv ("böswillig abwertend") als eine "(Elektro-)Hängebahn mit um 180 nach oben geschwenkter Laufkatze" bezeichnen/ansehen, auf welcher wiederum (von Sortern her bekannte) Kipp-Förderelemente montiert sind, wobei dieser Hinweis indes ersichtlich allein aus (technischen) Verständnisgründen gemacht wird und nicht etwa mit dem "Ziel" einer (sachlich auch völlig unbegründeten) Herabwürdigung der dem Erfindungsgegenstand zugrundeliegenden Ingenieurleistung.

Denn die vorliegende Problematik besteht - wie oben bereits angedeutet - bereits sein langer Zeit. Dennoch hat die gesamte einschlägige Fachwelt bisher noch keinerlei Lösung für die hier in Rede stehende Problematik vorgestellt oder auch nur vorgeschlagen.

Nun könnten zwar selbstverständlich für den erfindungsgemäßen, neuen Förderer grundsätzlich durchaus Kipp-Förderelemente verwandt werden, die sich auch bereits bei Sorteranlagen als (höchst-)vorteilhaft erwiesen haben, doch würde eine solche Entwicklung sicherlich kaum den einschlägigen Entwicklungskriterien folgen. Es werden daher für den erfindungsgemäßen Förderer Kipp-Förderelemente vorgeschlagen, wie sie nachstehend noch im einzelnen beschrieben sind, doch sei vorab - zum Stand der Technik - noch auf folgendes verwiesen:
Aus der WO 81/01 999 ist ein Förderelement bekannt, dessen Tragfläche beim Kippen zugleich begrenzt gedreht wird, so daß ein in Längsrichtung auf einem Tragelement angeordnetes, längliches Stückgutteil in zweckmäßiger Weise eine gewisse Drehung erfährt. Zu diesem Zweck ist der sich schräg vom Tragelement nach unten erstreckende Lagerzapfen in einem ortsfesten Lager gelagert, dessen Lagergehäuse fest mit dem Stützteil des Förderelementes verbunden ist, so daß beim Kippvorgang eine gewisse Drehung der Tragfläche um die ortsfeste Längsachse des Lagerzapfens möglich ist, wobei mithin der von der Längsachse durchdrungene Punkt der Tragfläche ortsfest verbleibt.

Obwohl der Abgabevorgang mit den aus dieser Druckschrift bekannten Förderelementen gegenüber dem zuvor beschriebenen Stand der Technik verbessert ist, ist er im Hinblick auf eine schonende Behandlung insbesondere von länglichen Stückgutteilen, die in Förderrichtung auf den Förderelementen liegen, noch nicht annähernd optimal, da die einem Stückgutteil beim Abkippen erteilte Drehbewegung sehr begrenzt ist und wie bei dem zuvor beschriebenen Stand der Technik ausschließlich durch Schwerkraftwirkung erfolgt.

Aus der DE-PS 36 02 861 ist ein gegenüber dem zuvor bekanntgewesenen Stand der Technik erheblich verbessertes gattungsgemäßes Förderelement bekanntgeworden, bei dem eine äußerst schonende Abgabe der Stückgutteile gewährleistet ist, wobei einem abzugebenden Stückgutteil jeweils beim Abgabevorgang über die Schwerkkraftwirkung hinaus noch ein für eine schonende Abgabe zweckmäßiger Bewegungsablauf eingeprägt wird, was gegenüber dem zuvor beschriebenen vorbekannten Kipp-Förderelment im wesentlichen dadurch erreicht wird, daß der Lagerzapfen beim Kippen des Tragelementes relativ zu dem Stützelement gesteuert schwenkbar ist, wobei darüber hinaus bevorzugt die Längsachse des Stützelementes im Förderzustand des Tragelementes bzgl. einer zwischen dem Tragelement einerseits und dem Stützteil andererseits verlaufenden, horizontalen Bezugsebene spiegelsymmetrisch zur Längsachse des Lagerzapfens verläuft und das beim Kipp-Förderelement gemäß der DE-PS 36 02 861 zapfenförmig ausgebildete Stützelement fest mit dem Stützteil verbunden ist.

Darüber hinaus ist bei dem aus der DE-PS 36 02 861 bekannten Kipp-Förderelement - ebenso wie bei dem aus der WO 81/01 999 bekannten Kipp-Förderelement - der fest an der Unterseite des Tragelementes angeordnete, schräg nach unten gerichtete, drehbar gelagerte Lagerzapfen mit dem zapfenförmig ausgebildeten Stützelement durch ein Kardangelenk verbunden, wobei die rechtwinklig zur Längsachse des zapfenförmigen Stützelementes verlaufende eine Drehachse des Kardangelenkes in derjenigen Vertikalebene verläuft, in welcher die Längsachsen des Lagerzapfens und des zapfenförmigen Stützelementes im Förderzustand verlaufen.

Das aus der DE-PS 36 02 861 bekannte Kipp-Förderelement, welches sich von dem zuvor bekanntgewordenen Stand der Technik sowohl hinsichtlich seiner Konstruktion als auch bzgl. seiner Funktionsweise ganz gravierend unterscheidet, hat sich in der Praxis bzgl. seiner Funktionsweise zwar kaum noch als verbesserungsbedürftig erwiesen, jedoch in fertigungstechnischer Hinsicht insbesondere im Hinblick auf das zwischen dem Lagerzapfen einerseits und dem zapfenförmigen Stützelement andererseits angeordnete Kardangelenk ganz erhebliche Schwierigkeiten bereitet, die systememanent und demgemäß nicht auszuräumen sind. Diese Schwierigkeiten liegen - ganz abgesehen von den ganz erheblichen Kosten des Kardangelenkes, die etwa 50 %(!) der Gesamtkosten des gesamten Kipp-Förderelementes ausmachen - insbesondere in den zu fordernden Toleranzen (und dabei nicht zuletzt wiederum den hiermit verbundenen Fertigungskosten). Hält man nämlich die Toleranz bei der Ausbildung gemäß der DE-PS 36 02 861 in einem für derartige maschinelle Einrichtungen üblichen Ausmaß bzw. Bereich und kommt dabei schon zu einem erheblichen Kostenaufwand, so "addieren" sich diese Toleranzen vom Bereich des etwa mittig im Kipp-Förderelementes angeordneten Kardangelenk zum Förderelement bzw. dessen Tragfläche hin, so daß dieses, wenn man es bspw. mit den Händen anfaßt und "kippelnd" um seine Längs- oder/und Querachse bewegt, ein relativ großes Spiel aufweist, welches von den Anwendern selbst dann als unbefriedigend empfunden wird, wenn es unterhalb der Schwelle bzw. Grenze liegt, von der ab es sich in nachteiliger Wirkung auf die Funktionsweise des Sorters auswirkt. Es hat sich gezeigt, daß die tatsächlichen oder auch nur potentiellen Abnehmer derartiger Stückgutförderer (= Sorter) nicht oder nur äußerst zögernd bereit sind, eine Konstruktion zu akzeptieren, bei welcher sich die Förderelemente schon im unbeladenen Zustand von Hand mehr oder weniger in allen Richtungen "kippelnd" (wenngleich selbstverständlich begrenzt) bewegen lassen. Diese Einstellung beruht vermutlich auf der Befürchtung, daß ein Stückgutförderer, dessen Tragelemente sich bereits bei Betriebsaufnahme entsprechend verhalten, mehr oder weniger kurzfristig aufgrund des normalen, üblichen Verschleißes in einen Zustand übergehen, indem die einzelnen Förderelemente aufgrund eines befürchteten Ausschlagens ihrer Lagerung sich wie welke Blumen verhalten und jeweils ungewollt und unsystematisch schon während des Transportes seitlich (wenngleich auch nur leicht) abgekippt angeordnet sind, wobei man wohl letztlich befürchtet, daß dieses Verhalten im Verlauf einer relativ kurzen Betriebszeit so weit zunehmen könnte, daß es sich dann auch in nachteiliger Weise auf das Betriebsverhalten auswirkt, daß also Stückgutteile bereits vor der angesteuerten Abgabestelle seitlich von der Tragfläche herabgleiten.

Es kann dahingestellt bleiben, ob diese Befürchtungen tatsächlich in überschaubarer Betriebszeit eintreten oder nicht, da dieses Vorurteil praktisch sämtlichen potentiellen Verwendern eigen (und auch durchaus verständlich) ist.

Diese Skepsis ist zumindest dann häufig nicht unberechtigt, wenn die Tragflächen eines derartigen Sorters in den Betriebspausen als Laufsteg zweckentfremdet werden. Dieses ist z.B. dann der Fall, wenn das Bedienungs- bzw. Wartungspersonal oder sonstige Dritte die Tragflächen der Förderelemente besteigen (bspw. um über dem Förderer Lampen zu montieren oder Glühbirnen auszuwechseln),wie dieses trotz entsprechender Verhaltensmaßregeln in praxi insbesondere gegenüber Nicht-Betriebsangehörigen einfach nicht zu unterbinden ist. In solchen Fällen wird nämlich ein derartiges Kipp-Förderelement, welches bspw. für eine Maximalbelastung von maximal 20 oder 30 kg ausgelegt ist, plötzlich mit z.B. 90 kg oder mehr (also dem Drei-, Vier- oder Mehrfachen) belastet, und es kann dann tatsächlich aufgrund dieser Überbelastungen zu einem noch größeren Spiel im Bereich der Tragfläche kommen.

In diesem Zusammenhang sei wegen der ganz erheblichen Bedeutung nochmals darauf verwiesen, daß nicht zuletzt auch kostenmäßige Gesichtspunkte hierbei eine ganz erhebliche Rolle spielen, da Kardangelenke, wie sie bei den Kipp-Förderelementen gemäß der WO 81/01 999 bzw. der DE-PS 36 02 861 zu verwenden sind, relativ teure Baugruppen sind, die im Rahmen der Gesamtkosten eines derartigen Kipp- Förderelement mit einem Anteil von bis zu 50 % und mehr ersichtlich eine gewaltige Rolle spielen, insbesondere wenn man bedenkt, daß bei einem größeren Sorter in aller Regel wenigstens hunderte derartiger Kipp-Förderelemente zum Einsatz kommen.

Bevorzugte Ausgestaltungen der oben beschriebenen Basiserfindung sind in den Unteransprüchen beschrieben.

Bei einer ersten Ausgestaltung des erfindungsgemäßen Förderelementes bleibt der Punkt der Tragfläche, der durch die Längsachse des Lagerzapfens durchsetzt wird, ersichtlich nicht ortsfest, sondern wird beim Abgeben des Stückgutteils aufgrund der Drehung des Tragelementes um die Längsachse des Lagerzapfens und des dabei um das Gelenk erfolgenden gesteuerten Schwenkens des Lagerzapfens relativ zum Stützzapfen gleichzeitig zur Seite, nach unten und nach vorn bewegt, so daß die Tragfläche bei der erfolgenden Kipp-Drehbewegung aus ihrer horizontalen Transportstellung im Förderzustand in ihre Abgabe-Endstellung eine Bewegung ausführt, welches das Stückgutteil in Richtung auf die Abgabestelle begleitet und ihm dabei eine quer zur Förderrichtung gerichtete Geschwindigkeitskomponente einprägt. Dabei hat sich gezeigt, daß durch eine derartige Ausbildung, die bei geeigneter Ausgestaltung mit verhältnismäßig einfachen und sehr robusten Bauteilen zu erzielen ist, eine äußerst schonende Abgabe der Stückgutteile erfolgt, ein Überschlagen von Stückgutteilen auszuschließen ist, ein Stückgutteil selbst bei unterschiedlicher Plazierung auf der Tragfläche mit relativ geringer Streubreite abgegeben wird, und längliche Stückgutteile, die im Förderzustand in ihrer Längsrichtung auf der Tragfläche angeordnet sind, bei der Abgabe um einen beachtlichen Winkel gedreht werden können, so daß die Aufnahmeeinrichtungen an einer Abgabestation entsprechend schmaler gehalten werden können und die auf das Stückgutteil beim anschließenden Ausrichten einwirkenden Kräfte entsprechend klein sind.

Obwohl die Längsachse des Stützzapfens grundsätzlich unter einem anderen Winkel zur Horizontalen verlaufen kann als die Längsachse des Lagerzapfens, hat es sich als besonders zweckmäßig erwiesen, wenn die beiden Längsachsen im Förderzustand des Tragelementes bzgl. einer zwischen dem Tragelement und dem Stützteil verlaufenden horizontalen Bezugsebene spiegelsymmetrisch zueinander verlaufen, also - von ihrem Schnittpunkt ausgehend - in einer Seitenansicht V-förmig angeordnet sind.

Zur Erzeugung der beim Abgeben eines Stückgutteils von der Tragfläche des Förderelementes vorgesehenen Drehung des fest mit dem Tragelement verbundenen Lagerzapfens um dessen Längsachse sowie der dieser Bewegung überlagerten, gesteuerten Schwenkbewegung des Lagerzapfens relativ zum Stützzapfen ist bevorzgut zwischen dem Tragelement und dem Stutzteil des Förderelementes ein Kippelement angeordnet, welches jeweils an dem Lagerzapfen und dem Stützzapfen drehbar gelagert und jeweils in Längsrichtung der beiden Zapfen unverschieblich angeordnet ist.

Gemäß einer besonders bevorzugten Ausgestaltung der vorliegenden Erfindung kann das Kippelement als V-förmiger Rohrkörper ausgebildet sein, dessen einer (erster) Schenkel konzentrisch zum Lagerzapfen bzw. dessen Längsachse und dessen anderer (zweiter) Schenkel konzentrisch zum Stützzapfen bzw. dessen Längsachse verläuft, wobei die beiden jeweils rechtwinklig zu der betreffenden Längsachse verlaufenden Stirnseiten des Kippelementes bevorzugt jeweils mit geringem Zwischenraum einer parallelen Fläche des Tragelementes bzw. des Stützteils gegenüberliegen und das Kippelement jeweils zum Tragelement bzw. zum Stützteil abgedichtet sein kann, um die Lagerstellen und das die beiden Zapfen verbindende Gelenk vor einer Verschmutzung zu schützen.

Im Förderzustand ist das Kippelement zweckmäßigerweise mittels eines lösbaren Verriegelungsmittels gegen eine Drehung verriegelt, wobei das Verriegelungsmittel mittels eines an jeder Abgabestelle angeordneten, gesteuert zu betätigenden Entriegelungsmittels zu entriegeln ist. Nach Lösen der zweckmäßigerweise am Stützteil erfolgenden Verriegelung des Kippelementes, kann das Kippelement sodann durch Betätigung eines an einer Abgabestelle angeordneten Betätigungsmittels gesteuert um die Längsachse des Stützzapfens gedreht werden, was einerseits ein Schwenken des Lagerzapfens um die Längsachse des Stützzapfens zur Folge hat und andererseits eine Drehung des Lagerzapfens um seine Längsachse.

Eine andere erfindungsgemäße Lösung dieser Aufgabe besteht erfindungsgemäß darin, daß die einander zugekehrten Endabschnitte des Lagerzapfens einerseits und des Stützteils bzw. des von diesem in Richtung auf die Tragfläche hochstehenden Stützelementes andererseits (unter Vericht auf ein diese beiden Bauteile beim Stand der Technik verbessertes Kardangelenk od.dgl.) nur über das Kippelement miteinander verbunden sind.

In bevorzugter Augestaltung der vorliegenden Erfindung weist das längs einer (i.a. schienenförmig ausgebildeten) Führung bewegliche Stützteil bei dem erfindungsgemäßen Kipp-Förderelement (statt des beim Gegenstand der DE-PS 36 02 861 vorhandenen Stützzapfens) eine Stützbuchse auf, welche den unteren Endabschnitt des Kippelementes konzentrisch umgibt, wie weiter unten noch im einzelnen erläutert werden wird.

Gemäß einer höchst bevorzugten Ausgestaltung der vorliegenden Erfindung kann das Stützteil in seitlicher Draufsicht (also gleichsam quer zur vertikalen Symmetrieebene des Kipp-Förderelementes gesehen) im wesentlichen in Form eines (gedrehten) E ausgebildet sein, wobei der Mittelschenkel des Stützteils die Lagerstelle für den unteren Endabschnitt des Kippelementes bilden kann und die beiden Außenschenkel des E-förmigen Stützteils jeweils (gelenkig) mit dem Tragelement verbunden sein können. Diese höchst bevorzugte Ausgestaltung hat sich im Rahmen der extensiven Entwicklungsarbeiten insbesondere für eine Ausgestaltung als höchst zweckmäßig erwiesen, bei welcher der die Lagerstelle für den unteren Endabschnitt des Kippelementes bildenden Mittelschenkel des Stützteils - wie vorstehend bereits dargelegt worden ist - als Stützbuchse ausgebildet ist.

Die beiden Außenschenkel des Stützteils können bevorzugt zueinander fluchten, und die vertikale mittlere Symmetrieebene der beiden Außenschenkel des Stützteils liegt dabei zweckmäßigerweise in der in Förderrichtung verlaufenden, vertikalen Symmetrieebene des erfindungsgemäßen Kipp-Förderelementes.

Weitere bevorzugte Ausgestaltungen der vorliegenden Erfindung sind in den Unteransprüchen beschrieben.

Die Erfindung ist nachstehend an Ausführungsbeispielen unter Bezugnahme auf eine Zeichnung weiter erläutert. Es zeigt:
Fig. 1 ein erfindungsgemäßes Fördermittel in (vereinfachter) perspektivischer Darstellung;
Fig. 2 eine teilweise Draufsicht auf eine Ausgestaltung des erfindungsgemäßen Förderers;
Fig. 3.1 eine vereinfachte Teildarstellung eines ersten Ausgestaltungsbeispiels einer Fördereinheit in Seitenansicht, teilweise im Schnitt;
Fig. 3.2 eine etwas vereinfachte Teilansicht eines zweiten Ausführungsbeispiels einer Fördereinheit in Seitenansicht, teilweise im Schnitt;
Fig. 4 das Förderelement gemäß Fig. 3.2 in einem durch die vertikale mittlere Symmetrieebene verlaufenden Schnitt;
Fig. 5 eine vereinfachte Teildarstellung einer (vereinfacht dargestellten) Fördereinheit im Förderzustand; und
Fig. 6 eine Fig. 5 entsprechende Darstellung, in welcher sich das Tragelement des Kipp-Förderelementes der Fördereinheit in Abgabestellung bewegt hat.

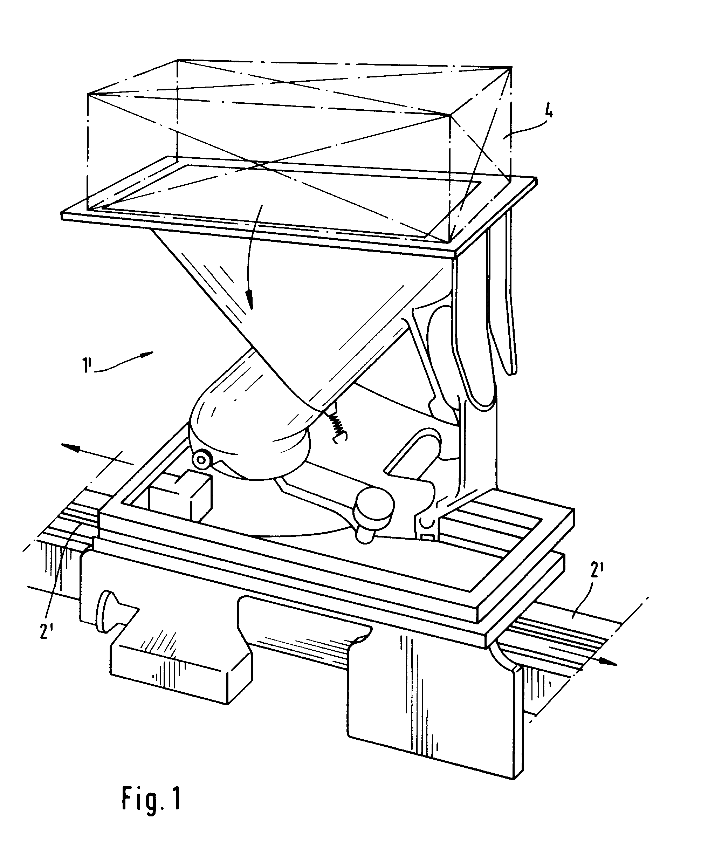

Fig. 1 zeigt ein im ganzen mit 1' bezeichnetes Fördermittel für einen erfindungsgemäßen (Unstetig- )Förderer für Stückgut mit einer Schienenführung 2', längs welcher das (die) einzelne(n) Fördereinheit(en) mittels einer nicht dargestellten Steuerung selbstfahrend entlangzubewegen ist (sind), und mit wenigstens einer Abgabestation (auf welche weiter unten noch eingegangenen wird), an welcher das von einem Fördermittel 1' zu transportierende Stückgutteil 4 (darauf gesteuert) abzugeben ist.

Das (mittels eines geeigneten Antriebs) selbstfahrende Fördermittel 1', von dem wahlweise diverse vorhanden sein können, ist (zweckmäßigerweise) an seiner Oberseite mit einem Kipp-Förderelement 1 versehen, welches weiter unten noch im einzelnen beschrieben wird. Das Kipp-Förderelement 1 ist mit einem in Fig. 1 nicht gesondert dargestellten eigenen Antrieb versehen sowie mit einer (Teil-)Steuerung, die Bestandteil einer Gesamtsteuerung ist, auf welche ebenfalls weiter unten noch eingegangen wird. Bevor dieses geschieht, sei zunächst folgendes ausgeführt:

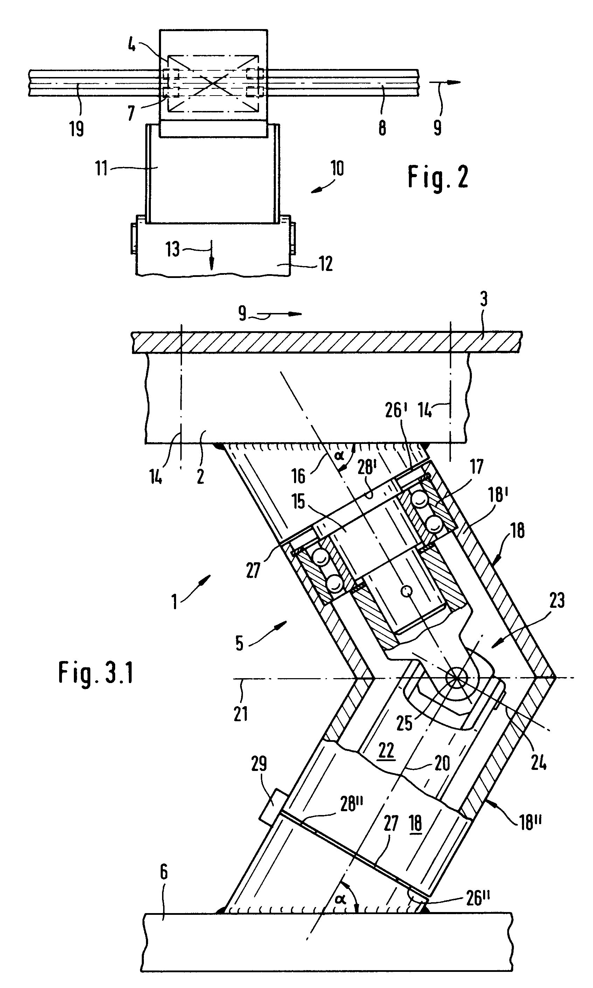

Die Fig. 1 und 2 zeigen in einer stark schematisierten Darstellung einen Teil eines erfindungsgemäßen Förderers, dessen - ggf. mit Weichen versehener - Schienenstrang 2' gleichsam einen Förderstrang bildet, welcher in einer horizontalen Ebene umläuft, jeweils gelenkig miteinander verbunden sind und einen endlosen Förderstang bilden, welcher in einer horizontalen Ebene umläuft, jedoch auch raumgängig verlaufen könnte. Die Förderelemente 1 bestehen jeweils im wesentlichen aus einem Tragelement 2, welches an seiner Oberseite die Tragfläche 3 für ein Stückgutteil 4 aufweist und über eine im ganzen mit 5 bezeichnete Stützeinrichtung an einem Stützteil 6 abgestützt ist, welches mit Laufrollen 7 an einer Führung 8 verfahrbar ist, die als Doppelschiene ausgebildet ist (s. Fig. 2) und in Förderrichtung 9 verläuft.

Die Stückgutteile 4 sind jeweils an mehreren in der Zeichnung nicht dargestellten Aufgabestellen auf die Tragfläche 3 eines Förderelementes 1 aufzugeben und durch Schrägstellung der im Förderzustand horizontalen Tragfläche 3 wahlweise an einer von mehreren längs der Förderstrecke vorgesehenen Abgabestationen seitlich zur Förderrichtung 9 abzugeben.

Eine derartige Abgabestation 10 ist in Fig. 2 schematisch dargestellt. Sie enthält außer Einrichtungen, mittels derer eine Abgabe eines von einem bestimmten Förderelement 1 zugeförderten Stückgutteils 4 auszulösen ist, eine schräg zur Horizontalen verlaufende Rutsche 11, die so angeordnet ist, daß ein abzugebendes Stückgutteil 4 beim Heruntergleiten von der Tragfläche 3 des betreffenden Förderelementes 1 auf die Rutsche 11 gelangt und von dieser auf einen Förderer 12 der Abgabestation 10 aufgegeben wird, welcher das betreffende Stückgutteil 4 gemäß dem Pfeil 13 quer zur Förderrichtung gemäß dem Pfeil 9 abfördert.

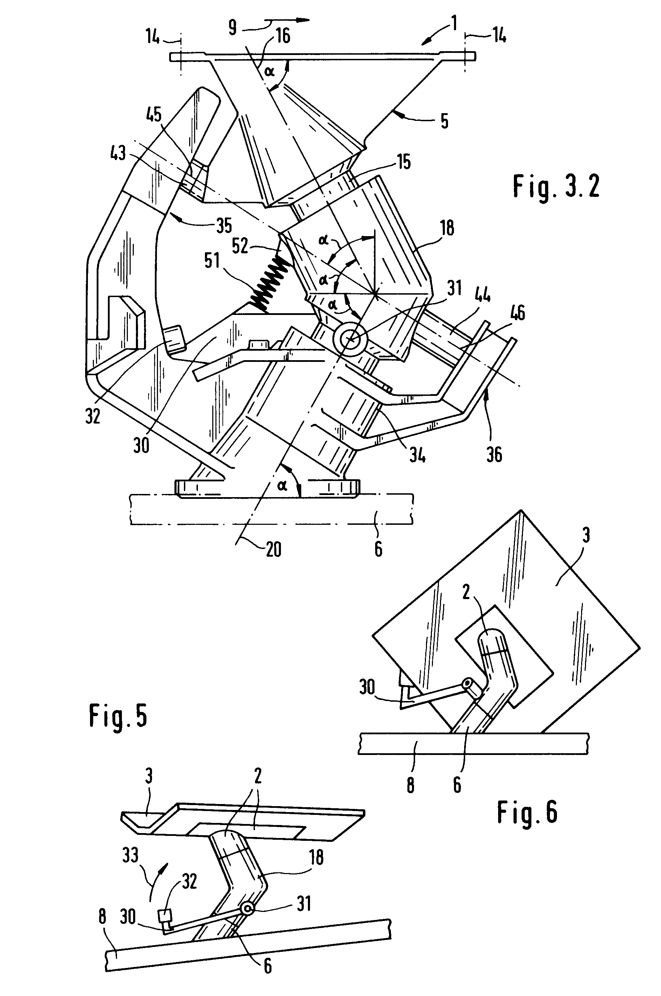

Fig.3.1 zeigt in einer gegenüber den Fig. 1 und 2 erheblich vergrößerten, etwas schematisierten seitlichen Teilansicht ein Förderelement 1, dessen Tragelement 2 mit Verbindungsmitteln 14, von denen nur die Mittellinien dargestellt sind, mit der Tragfläche 3 zum Abstützen eines Stückgutteils 4 verbunden ist.

Von der Unterseite des Tragelementes 2 erstreckt sich ein Lagerzapfen 15 des Förderelementes 1 schräg nach unten, dessen Längsachse mit 16 bezeichnet ist. Das fest mit der Tragfläche 3 verbundene Tragelement 2 ist in einer weiter unten noch im einzelnen beschriebenen Weise mittels des Lagerzapfens 15 relativ zum Stützteil 6 um die Längsachse 16 drehbar gelagert, und zwar mittels eines Lagers 17, bei dem es sich im vorliegenden Fall um ein Wälzlager handelt, dessen Innenring fest am Lagerzapfen 15 befestigt, und dessen Außenring mit einem im wesentlichen die Stützeinrichtung 5 bildenden Kippelement 18 verbunden ist, welches weiter unten noch im einzelnen beschrieben ist. Die Längsachse 16 verläuft mit der in Förderrichtung 9 verlaufenden Symmetrieachse 19 (s. Fig. 2) des Tragelementes 2 bzw. dessen Tragfläche 3 in einer gemeinsamen Vertikalebene und schließt mit dem in Förderrichtung 9 vornliegenden Abschnitt der Tragfläche 3 einen spitzen Winkel a ein.

Der fest mit dem Tragelement 2 verbundene Lagerzapfen des Förderelementes 1 ist beim Kippen des Tragelementes 2 um einen zu seiner Längsachse 16 abgewinkelt angeordneten Stützzapfen 22 gesteuert schwenkbar, wie sich aus der weiteren Beschreibung noch im einzelnen ergibt. Die Längsachse 20 des Stützzapfens 22 verläuft im Förderzustand des Tragelementes 2, also bei horizontaler Tragfläche 3, in derselben Ebene (Ausgangsebene) wie die Längsachse 16 und die Symmetrieachse 19 des Tragelementes 2. Im übrigen verläuft die Längsachse 20 im Förderzustand des Tragelementes 2 bzgl. einer zwischen dem Tragelement 2 und dem Stützteil 6 verlaufenden horizontalen Bezugsebene 21 spiegelsymmetrisch zur Längsachse 16 des Lagerzapfens 15, wobei mithin der Winkel a zur Horizontalen gleich groß ist und beim dargestellten Ausführungsbeispiel 60 beträgt.

Der Lagerzapfen 15 des Förderelementes 1 ist an seinem unteren Ende an dem vom Stützteil 6 schräg hochstehenden Stützzapfen 22 angelenkt, der fest mit dem Stützteil 6 verbunden ist. Zwischen dem Kippelement 18 und dem Stützzapfen 22 ist in analoger Weise wie beim Lagerzapfen 15 ein Lager angeordnet, welches der Einfachheit halber in der Zeichnung nicht im einzelnen dargestellt ist.

Der Lagerzapfen 15 ist mit dem Stützzapfen 22 des Förderelementes 1 durch ein Kardangelenk 23 verbunden. Die eine Drehachse 24 des Kardangelenkes 23 verläuft in der Ausgangsebene, in welcher sich die beiden Längsachsen 16, 20 im Transportzustand befinden und in welcher auchdie Symmetrieachse 19 der Tragfläche 3 im Förderzustand verläuft. Bei der in der Ausgangsebene der beiden Längsachsen 16, 20 verlaufenden Drehachse 24 des Kardangelenkes 23 handelt es sich um eine Achse, die rechtwinklig zur Längsachse 20 des Stützzapfens 22 verläuft, während die andere Drehachse 25 des Kardangelenkes 23 selbstverständlich wiederum rechtwinklig zur Drehachse 24 angeordnet ist.

Wie bereits weiter oben angedeutet worden ist, ist das zwischen dem Tragelement 2 und dem Stützteil 6 des Förderelementes 1 angeordnete Kippelement 18 jeweils am Lagerzapfen 15 und am Stützzapfen 22 mittels eines Lagers (z.B. 17) drehbar gelagert, jedoch jeweils in Längsrichtung der Zapfen 15 bzw. 22 bzw. deren Längsachsen 16 bzw. 20 nicht verschiebbar.

Das Kippelement 18 ist als V-förmiger Rohrkörper ausgebildet, dessen dem Tragelement 2 zugekehrter oberer (erster) Schenkel 18' konzentrisch zum Lagerzapfen 15 verläuft, und dessen zweiter Schenkel 18" konzentrisch zum Stützzapfen 22 verläuft. Die beiden jeweils rechtwinklig zu der betreffenden Längsachse 16 bzw. 20 verlaufenden Stirnseiten 26' bzw. 26" des Kippelementes 18 sind jeweils mit einem geringen Zwischenraum 27 an einer parallelen Fläche 28' bzw. 28" des Tragelementes 2 bzw. des Stützteils 6 gegenüberliegend angeordnet, wobei die Zwischenräume 27 jeweils mittels einer in der Zeichnung nicht dargestellten Dichtung abgedichtet sind.

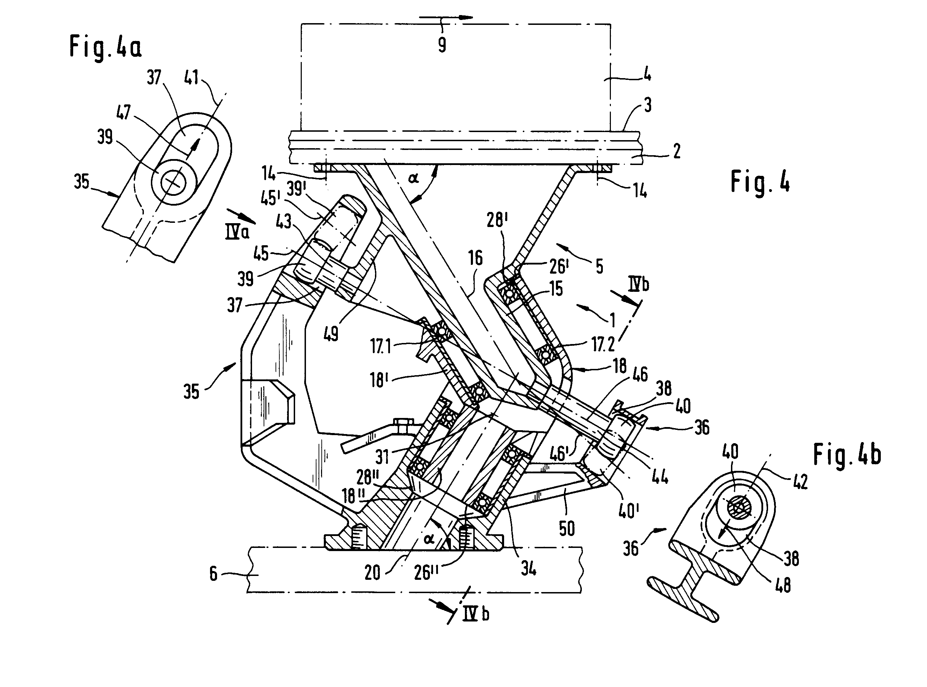

Das Kippelement 18 ist in dem in Fig. 3 und Fig. 4 dargestellten Förderzustand mittels eines in Fig. 3 lediglich schematisch dargestellten Verriegelungsmittels 29 gegen eine Drehung am Stützteil 6 verriegelt. Da sich das Kippelement 18 im verriegelten Zustand nicht um die Längsachse 20 drehen kann, ist demgemäß auch das Tragelement 2 über die beiden Zapfen 15, 22 und das diese verbindende Kardangelenk 23 verriegelt. Das Verriegelungsmittel 29 des Förderelementes 1 ist mittels eines an jede Abgabestation 10 angeordneten, gesteuert zu betätigenden Entriegelungsmittels zu entriegeln. Eine derartige Entriegelung kann bspw. dadurch erfolgen, daß an dem Kippelement 18 gemäß Fig. 4 ein Hebel 30 an einer horizontalen Schwenkachse 31 angelenkt ist, der mit seinem seitlich vorstehenden freien Ende, an dem bspw. eine Rolle 32 angebracht sein kann, an derjenigen Abgabestation 10, an welcher das Förderelement das von ihm transportierte Stückgutteil 4 abgeben soll, auf eine Rampe auffährt und um die Schwenkachse 31 in Richtung des Pfeils 33 hochgeschwenkt wird, wodurch von dem Hebel 30 auf das Verriegelungsmittel 29 eingewirkt und dieses entriegelt wird. Da das Förderelement 1 nach beiden Seiten entleerbar sein soll, ist selbstverständlich an jeder Seite ein entsprechender Hebel 30 angeordnet bzw. ein Bauteil vorgesehen, welches beiderseits der Förderstrecke an einer Abgabestation 10 zwecks Entriegelung des Verriegelungsmittels 29 zu betätigen ist.

Nachdem der in Fig. 3 der besseren Übersicht halber nicht dargestellte Hebel 30 hochgeschwenkt worden ist und das Verriegelungsmittel 29 demgemäß entriegelt worden ist, wird das Kippelement 18 mittels eines an der betreffenden Abgabestation 10 angeordneten Betätigungsmittels gesteuert um die Längsachse 20 des Stützzapfens 22 geschwenkt. Dieses kann bspw. dadurch erfolgen, daß die Rolle 32 des Hebels 29 in eine an der Abgabestation 10 angeordnete Führungsschiene einfährt, welche so gekrümmt ist, daß beim Passieren der Rolle 32 eine Drehung des Kippelementes 18 um die Längsachse 20 erfolgt.

Beim Drehen des Kippelementes 18 um die Längsachse 20 verändert sich die Stellung des in der Führung 8 geführten Stützteils 6 relativ zur Führung 8 - abgesehen von der Vorwärtsbewegung in Förderrichtung - ersichtlich nicht. Dagegen bewirkt ein Schwenken des Kippelementes 18 um die Längsachse 20 eine Dreh-Kipp-Bewegung des Tragelementes 2 und schwenkt dessen Tragfläche 3 bis in eine in Fig. 5 dargestellte Endstellung, wobei die Entleerungsendstellung gemäß Fig. 5 jedoch einer Betätigung des in Fig. 4 nicht dargestellten, auf der anderen Seite des Kippelementes 18 angeordneten Hebels 30 an einer Abgabestation 10 entspricht, während eine Betätigung des in den Fig. 4 und 5 dargestellten Hebels 30 ein Drehkippen zur anderen Seite bewirken würde. Bei dieser Dreh-Kipp-Bewegung des Tragelementes 2 bzw. dessen Tragfläche 3 aus dessen horizontaler Förderstellung gemäß Fig. 3 und 4 erfolgt eine Drehung der Tragfläche 3 sowohl um die Längsachse 20 als auch um die Längsachse 16, die dabei um die Längsachse 20 bzw. den Stützzapfen 22 geschwenkt wird, so daß sich insgesamt eine geometrisch etwas komplizierte Bewegung der ein Stückggutteil 4 abstützenden Tragfläche 3 des Tragelementes 2 bzw. des Förderelementes 1 ergibt, bei welcher die Tragfläche 3 zur Abgabeseite hin in eine Schrägstellung gebracht wird, dabei jedoch gleichzeitig mittelpunktmäßig abgesenkt und während der Drehung nach vorn bewegt wird, so daß die Tragfläche das Stückgutteil 4 bei der Abgabe zunächst noch unter Vermittlung einer entsprechenden Beschleunigung begleitet und das Stückgutteil 4 in extrem schonender Weise auf die nachgeschaltete Rutsche 11 (s. Fig. 2) übergeben wird.

Durch diese begleitende Bewegung der Tragfläche beim Abgeben und die dabei dem Stückgutteil eingeprägten Bewegungen bzw. Kräfte erfolgt zugleich eine Umlenkung der auf dem Förderelement 1 in Förderrichtung 9 verlaufenden Längsachse des Stückgutteils 4, was insbesondere für längliche Stückgutteile höchst vorteilhaft ist, da diese hierdurch bereits bzgl. ihrer räumlichen Orientierung gedreht werden und demgemäß in günstiger Weise in die Aufnahmeeinrichtung der Abgabestation 10 eingefädelt werden.

Trotz der erheblichen Vorteile des beschriebenen Förderelementes ist dieses ersichtlich mit verhältnismäßig wenigen, einfachen und robusten Bauteilen realisierbar, so daß erfindungsgemäß ein Förderelement geschaffen wurde, welches nicht nur den fördertechnischen Anforderungen - einschließlich sehr schonender Behandlung der Stückgutteile - in hervorragender Weise Rechnung trägt, sondern aufgrund seiner einfachen und robusten Ausführbarkeit kostenmäßig günstig und betrieblich äußerst zuverlässig ist.

Im Gegensatz zu der Ausgestaltung gemäß Fig. 3.1 ist der Lagerzapfen 15 des Kipp-Förderelementes 1 bei der Ausgestaltung gemäß den Fig. 3.2 und 4 an seinem freien unteren Endabschnitt nicht (über ein Kreuz- bzw. Kardangelenk oder ggf. ein Kugelgelenk) an der fest mit dem Stützteil 6 verbundenen Stützbuchse 34 angelenkt, sondern mit dieser lediglich über das Kippelement 18 sowie mit größerem Abstand zur Längsachse 20 angeordnete Außenschenkel 35 und 36 des Stützteils 6 verbunden, die integral mit dem Stützteil 6 ausgebildet sind. Wie insbesondere aus den Fig. 3 und 4 erkennbar ist, ist nämlich das Stützteil 6 in seitlicher Draufsicht im wesentlichen in Form eines E ausgebildet, dessen geometrischer Steg um den Winkel a aus der Vertikalen gedreht ist, wobei der Winkel a derjenige (spitze) Winkel ist, unter dem die Längsachsen 15 und 20 jeweils spiegelsymmetrisch zur Horizontalen verlaufen. Dabei bildet der Mittelschenkel des E-förmigen Stützteils 6 die Stützbuchse 34 und damit die Lagerstelle für den unteren Endabschnitt 18" des Kippelementes 18, während die beiden Außenschenkel 35, 36 des E-förmigen Stützteils 6 jeweils beweglich mit dem Tragelement 2 verbunden sind.

Die beiden Außenschenkel 35, 36 des Stützteils 6 fluchten in einer Vertikalebene zueinander, und zwar in der vertikalen Symmetrieebene des Kipp-Förderelementes 1. Sie weisen jeweils an ihrem oberen Endabschnitt eine Ausnehmung 37 bzw. 38 auf (s. insbesondere Fig. 4a und 4b), in welcher jeweils ein Führungsnocken 39 bzw. 40 der Stützeinrichtung 5 bzw. des Tragelementes 2 geführt ist. Die Ausnehmungen 37, 38 der Außenschenkel 35, 36 sind als Langlöcher ausgebildet, deren Längsachse 41 bzw. 42 in der vertikalen Symmetrieebene liegt. Die Führungsnocken 39, 40 sind als Rollen mit jeweils einem elastischen Mantel ausgebildet, so daß bei einer Relativbewegung der Führungsnocken 39, 40 in den Ausnehmungen 37, 38 praktisch keine Geräusche entstehen und i.ü. auch die Toleranzfragen auf diese Weise wegen der Elastizität mühelos beherrscht sind.

Die mehr als Rollen ausgebildeten Führungsnocken 39, 40 sind jeweils an einem Führungsnockenhalter 43 bzw. 44 angeordnet, der mit der Stützeinrichtung 5 bzw. dem Tragelement 2 fest verbunden ist, wobei die die Mittelachse der Führungsnocken 39, 40 bildenden Achsen 45 bzw. 46 zueinander fluchten und die Führungsnockenachsen 45, 46 ersichtlich in der vertikalen Symmetrieebene liegen. Obwohl die Führungsnockenhalter 43, 44 funktionsmäßig zur Stützeinrichtung 5 bzw. dem Tragelement 2 gehören und demgemäß funktionsmäßig integral mit diesem ausgebildet sein könnten, sind sie, wie insbesondere aus Fig. 4 erkennbar ist, als Scheibe 43 bzw. Buchse 44 ausgebildet, um die Montage zu erleichtern bzw. überhaupt zu ermöglichen.

Aus den vorstehenden Ausführungen sowie insbesondere den Fig. 3 und 4 ergibt sich, daß das Kippelement 18 jeweils in Längsrichtung der Längsachsen 16 bzw. 20 (axial) unbeweglich ist, doch ist es selbstverständlich insgesamt drehbar, um die Kippbewegung an einer Abgabestation 10 einzuleiten und durchzuführen, wie dieses noch weiter erläutert werden wird.

Das Kippelement 18 ist erkennbar als V-förmiger Rohrkörper ausgebildet, dessen oberer Schenkel 18' konzentrisch zum Lagerzapfen 15 und damit dessen Längsachse 16 und dessen unterer Schenkel 18" konzentrisch zur Längsachse 20 der Stützbuchse 34 verläuft, diese aber nicht konzentrisch umgibt, wie dieses bei der Ausgestaltung gemäß der DE-PS 36 02 861 der Fall ist, sondern relativ zur Stützbuchse 34 gleichsam als Lagerzapfen wirkt, wie insbesondere der Darstellung im unteren Teil von Fig. 4 zu entnehmen ist.

Die beiden jeweils rechtwinklig zu der betreffenden Längsachse 16 bzw. 20 verlaufenden Stirnseiten 26' bzw. 26" des Kippelementes 18 liegen jeweils einer parallelen Fläche 28' bzw. 28" des Tragelementes 2 bzw. der Stützbuchse 34 gegenüber, wobei das Kippelement 18 mithin zum Tragelement 2 und auch zur Stützbuchse 34 zumindest im wesentlichen abgedichtet ist.

Das Kippelement 18 ist in dem in den Fig. 1 bis 5 dargestellten Förderzustand mittels eines in der Zeichnung nicht im einzelnen dargestellten Verriegelungsmittels gegen eine Drehung am Stützteil 6 verriegelt. Da sich das Kippelement 18 im verriegelten Zustand nicht um die Längsachse 20 der Stützbuchse 34 drehen kann, ist demgemäß auch das Tragelement 2 verriegelt.

Das in der Zeichnung nicht im einzelnen dargestellte Verriegelungsmittel des Kipp-Förderelementes 1 ist mittels eines an jeder Abgabestation 10 angeordneten, gesteuert zu betätigenden Entriegelungsmittels zu entriegeln. Eine derartige Entriegelung kann bspw. dadurch erfolgen, daß an dem Kippelement 18 gemäß den Fig. 5 und 6 ein Hebel 30 an einer Schwenkachse 31 angelenkt ist, der mit seinem seitlich vorstehenden freien Ende, an dem zweckmäßigerweise eine Rolle 32 angebracht sein kann, an derjenigen Abgabestation 10, an welcher das Förderelement 4 das von ihm transportierte Stückgutteil 4 abgeben soll, auf eine Rampe auffährt und um die Schwenkachse 31 in Richtung des Pfeiles 33 hochgeschwenkt wird, wodurch von dem Hebel 30 auf das Verriegelungsmittel 29 eingewirkt und dieses entriegelt wird. Da das Kippförderelement 1 nach beiden Seiten entleerbar sein soll, ist selbstverständlich an jeder Seite ein entsprechender Hebel 30 angeordnet bzw. ein Bauteil vorgesehen, welches beiderseits der Förderstrecke an einer Abgabestation 10 zwecks Entriegelung des Entriegelungsmittels zu betätigen ist.

Bei dem an einer Abgabestation 10 initiierten Kippen, bei dem ein Steuerelement der Abgabestation 10 in geeigneter Weise auf die eine Rolle 32 des Hebels 30 einwirkt, daß dieser um die horizontal verlaufende Achse 31 geschwenkt, das Kippelement 18 entriegelt und gedreht wird, verändert sich die Stellung des in der i.a. schienenförmigen Führung 8 geführten Stützteils 6 relativ zur Führung 8 - abgesehen von der Vorwärtsbewegung in Förderrichtung 9 - ersichtlich nicht. Dagegen bewirkt ein Schwenken des Kippelementes 18 um die Längsachse 20 eine Dreh-Kipp-Bewegung des Tragelementes 2 und schwenkt dessen Tragfläche 3 bis in die in Fig. 6 schematisiert dargestellte Endstellung, wobei die Entleerungsendstellung gemäß Fig. 6 jedoch einer Betätigung des in den Fig. 5 und 6 nicht dargestellten, auf der anderen Seite des Kippelementes 18 angeordneten Hebels 30 an einer Abgabestation 10 entspricht, während eine Betätigung des in den Fig. 5 und 6 dargestellten Hebels 30 ein Drehkippen zur anderen Seite bewirken würde.

Bei dieser Dreh-Kipp-Bewegung des Trageelementes 2 bzw. dessen Tragfläche 3 aus der horizontalen Förderstellung gemäß den Fig. 1 bis 5 erfolgt eine Drehung der Tragfläche 3 um die Längsachse 16. Außerdem wird der Lagerzapfen 15 (und damit das Tragelement 2 mit seiner Tragfläche 3) relativ zu dem Stützelement 34 gesteuert geschwenkt, so daß sich insgesamt eine geometrisch etwas komplizierte Bewegung der ein Stückgutteil 4 abstützenden Tragfläche des Tragelementes 2 ergibt, bei welcher die Tragfläche 3 zur Abgabestelle hin in eine Schrägstellung gebracht wird, dabei jedoch gleichzeitig mittelpunktmäßig abgesenkt und während der Drehung nach vorn bewegt wird, so daß die Tragfläche 3 das Stückgutteil 4 bei der Abgabe zunächst noch unter Vermittlung einer entsprechenden Beschleunigung begleitet und das Stückgutteil 4 in extrem schonender Weise auf die nachgeschaltete Rutsche 11 (s. Fig. 2) übergeben wird.

Bei dieser über eine Rolle 32 und den Hebeln 30 auf das Kippelement 18 übertragenen und demgemäß vom Kippelement 18 dem Tragelement 2 eingeprägten Dreh-Kipp-Bewegung erfolgt überdies zugleich ein Schwenken der Achse 45-46 (s. Fig. 4) im Uhrzeigersinne, wobei der rollenförmige Führungsnocken 39 gemäß dem in Fig. 4a eingezeichneten Pfeil 47 in der als Langloch ausgebildeten Ausnehmung 37 des Außenschenkels 35 des Stützteils 6 schräg nach oben und in entsprechender Weise der Führungsnocken 40 in der ihm zugeordneten, ebenfalls als Langloch ausgebildeten Ausnehmung 38 des Außenschenkels 36 gemäß dem Pfeil 48 (s. Fig. 4 b) schräg nach unten bewegt wird.

Trotz des oben bereits (auch hinsichtlich der Gründe) erörterten Verzichtes einer antriebsmäßigen Verbindung zwischen dem Lagerzapfen 15 und der Stützbuchse 34 (über ein Kardangelenk od.dgl.) und der damit vermiedenen technischen Schwierigkeiten und wirtschaftlichen (nämlich kostenmäßigen) Nachteile ist mit der erfindungsgemäßen Ausbildung des Kipp-Förderelementes 1 nicht nur eine qualitativ grundsätzlich bereits mit dem Kipp-Förderelement gemäß der DE-PS 36 02 861 erreichte Dreh-Kipp-Bewegung der oben beschriebenen Art zu erreichen, sondern diese ist bei dem erfindungsgemäßen Kipp-Förderelement 1 sogar noch zu optimieren, so daß neben sämtlichen oben bereits angedeuteten und weiteren Vorteilen der vorliegenden Erfindung eine derart schonende Abgabe von Stückgutteilen 4 an den Abgabestationen 10 zu erreichen ist, wie sie bisher weder von den Herstellern noch auch von den Anwendern für möglich gehalten worden ist.

Es sei noch nachgetragen, daß zur besseren Verdeutlichung der Konstruktion und der Funktionsweise in Fig. 4 die Schwenkstellung bzgl. der Führungsnocken 39, 40 und ihrer Längsachsen 41 bzw. 42 mit strichpunktierten Linien angedeutet worden ist, wobei die entsprechenden Bezugszeichen jeweils mit einem ""' bezeichnet worden sind.

Durch die oben beschriebene begleitende Bewegung der Tragfläche 3 beim Abgeben eines Stückgutteils 4 und die dabei dem Stückgutteil 4 angeprägten Bewegungen bzw. Kräfte erfolgt zugleich auch noch eine Umlenkung der zunächst auf dem Kipp-Förderelement 1 in Förderrichtung 9 verlaufenden Längsachse des Stückgutteils 4, was insbesondere für längliche Stückgutteile höchst vorteilhaft ist, da diese hierdurch bereits bzgl. ihrer räumlichen Orientierung gedreht werden und demgemäß in günstiger Weise in die Aufnahmerichtung der Abgabestation gleichsam eingefädelt werden.

Trotz der ganz erheblichen Vorteile des beschriebenen Kipp-Förderelementes 1 gemäß der vorliegenden Erfindung ist dieses ersichtlich mit verhältnismäßig wenigen, einfachen und robusten Bauteilen realisierbar, wobei die Fertigungskosten eines derartigen Kipp-Förderelementes 1 gegenüber einer Ausgestaltung gemäß der DE-PS 36 02 861 um ca. 50 %(!) zu reduzieren sind und dabei - wie ausgeführt - nicht etwa irgendwelche Nachteile in Kauf genommen werden, sondern sogar noch vorteilhaftere Wirkungen zu erzielen sind, so daß insgesamt erfindungsgemäß ein Kipp-Förderelement geschaffen wurde, welches nicht nur den fördertechnischen Anforderungen - einschließlich extrem schonender Behandlung der Stückgutteile 4 - in hervorragender Weise Rechnung trägt, sondern insgesamt sowohl in technischer als auch in wirtschaftlicher Weise sämtlichen Anforderungen Rechnung trägt.

### BEZUGSZEICHENLISTE (LIST OF REFERENCE NUMERALS)

1 (kipp-)Fdrderelement 1' - Fördermittel 1
2 Tragelement 2' - Schienenführung 2
3 Tragfläche (von 2) 3
4 Stückgutteil 4
5 Stützeinrichtung 5
6 Stützteil 6
7 Laufrollen 7
8 (Schienen-) Führung 8
9 Pfeil (Förderrichtung) 9
10 Abgabestation 10
11 Rutsche 11
12 Förderer 12
13 Pfeil 13
14 Verbindungsmittel 14
15 Lagerzapfen (von 2) 15
16 Längsachse (von 15) 16
17.1, 17.2 Lager (für 15) 17
18 Kippelement 18', 18" - Schenkel (von 18) 18
19 Symmetrieachse 19
₂₀ Längsachse (von 22) 20
21 Bezugsebene 21
₂₂ Stützzapfen 22
23 Kardangelenk 23
₂₄ Drehachse (von 23) 24
25 Drehachse (von 23) 25
26', 26" Stirnseiten (von 18) 26
27 Zwischenraum 27
28', 28" Flächen 28
29 Verriegelungsmittel 29
30 Hebel 30
3¹ Schwenkachse (für 30) 31
32 Rolle 32
33 Pfeil 33
3⁴ Stützbuchse 34
35 Außenschenkel (von 6) 35
36 Außenschenkel (von 6) 36
37 Ausnehmung (von 35) 37
36 Ausnehmung (von 36) 38
39 Führungsnocken 39
⁴0 Führungsnocken 40
41 Längsachse (von 37) 41
⁴2 Längsachse (von 38) 42
43 Führuncrsnockenhalter 43
44 Führungsnockenhalter 44
45 Achse (für 39) 45
46 Achse (für 40) 46
47 Pfeil 47
48 Pfeil 48
49 Befestiqungsabschnitt 49
₅₀ Befestigungsabschnitt 50
51 Feder 51
52 Ansatz (von 18) 52
53 Ansatz (von 30) 53
54 54
55 55
56 56
57 57
⁵⁸ 5₈
59 ₅₉
60 60
61 61
62 62
63 63
64 64
65 65

## Patentansprüche

1. Förderer (1'), insbesondere Unstetigförderer für Stückgut (4), mit einer Schienenführung (2'), längs welcher die einzelne(n) Fördereinheit(en) (1') gesteuert selbstfahrend entlangzubewegen ist (sind), und mit (wenigstens) einer Abgabestation (10), an welcher das von einem Fördermittel (1') transportierte Gut (4) (gesteuert) abzugeben ist, dadurch gekennzeichnet, daß ein/das Fördermittel (1') - vorzugsweise an seiner Oberseite - mit einem Kipp-Förderelement (1) versehen ist.

2. Förderer nach Anspruch 1, dadurch gekennzeichnet, daß das/jedes Förderelement (1) mit einem eigenen Antrieb versehen ist.

3. Förderer nach Anspruch 1 oder 2, dadurch gekennzeichnet, daß das/jedes Förderelement (1) mit einer eigenen (Teil-)Steuerung versehen ist.

4. Förderer nach einem oder mehreren der vorhergehenden Ansprüche, dadurch gekennzeichnet, daß das Kipp-Förderelement (1) im Förderzustand (jeweils) eine im wesentlichen horizontale Tragfläche (3) aufweist, auf welcher (wenigstens) eine Stückguteinheit wie ein Stückgutteil (4) anzuordnen ist, welche durch Kippen der Tragfläche (3) (wahlweise) an einer (von i.a. mehreren) längs der Förderstrecke vorgesehenen Abgabestation(en) (10) seitlich zur Förderrichtung (9) abzugeben ist, mit einem die Tragfläche (3) aufweisenden Tragelement (2), welches über eine Stützeinrichtung (5) an einem längs einer Führung (8) verfahrbaren Stützteil (6) abgestützt ist, wobei das Tragelement (2) mit einem fest an seiner Unterseite angeordneten, schräg nach unten gerichteten, drehbar gelagerten Lagerzapfen (15) versehen ist und beim Kippen um die Längsachse (16) des Lagerzapfens (15) drehbar ist.

5. Förderer nach einem oder mehreren der vorhergehenden Ansprüche, dadurch gekennzeichnet, daß der Lagerzapfen (15) an seinem unteren Ende über eine winkelbewegliche Gelenkkupplung (23) mit einem vom Stützteil (6) hochstehenden, fest mit diesem verbundenen Stützzapfen (22) verbunden ist, dessen Längsachse (20) abgewinkelt zur Längsachse (16) des Lagerzapfens verläuft.

6. Förderer nach einem oder mehreren der vorhergehenden Ansprüche, insbesondere nach Anspruch 5, dadurch gekennzeichnet, daß der Lagerzapfen (15) beim Kippen des Tragelementes (2) relativ zu dem Stützzapfen (22) gesteuert schwenkbar ist.

7. Förderer nach einem oder mehreren der vorhergehenden Ansprüche, dadurch gekennzeichnet, daß die Längsachse (20) des Stützzapfens (22) im Förderzustand des Tragelementes (2) bzgl. einer zwischen dem Tragelement (2) und dem Stützteil (6) verlaufenden horizontalen Bezugsebene (21) spiegelsymmetrisch zur Längsachse (16) des Lagerzapfens (15) verläuft.

8. Förderer nach einem der vorhergehenden Ansprüche, dadurch gekennzeichnet, daß der Lagerzapfen (15) mit dem Stützzapfen (22) in an sich bekannter Weise durch ein Kardangelenk (23) verbunden ist, wobei die rechtwinklig zur Längsachse (20) des Stützzapfens (22) verlaufende eine Drehachse (24) des Kardangelenkes (23) in der Vertikalebene verläuf, in welcher die Längsachsen (16, 20) des Lagerzapfens (15) und des Stützzapfens (22) im Förderzustand verlaufen.

9. Förderer nach einem oder mehreren der vorhergehenden Ansprüche, dadurch gekennzeichnet, daß zwischen dem Tragelement (2) und dem Stützteil (6) ein Kippelement (18) angeordnet ist, welches jeweils an dem Lagerzapfen (15) und dem Stützzapfen (22) drehbar gelagert ist.

10. Förderer nach Anspruch 9, dadurch gekennzeichnet, daß das Kippelement (18) jeweils in Längsrichtung der beiden Zapfen (15, 22) unbeweglich angeordnet ist.

11. Förderer nach Anspruch 9 oder 10, dadurch gekennzeichnet, daß das Kippelement (18) als V-förmiger Rohrkörper ausgebildet ist, dessen einer (erster) Schenkel (18') konzentrisch zum Lagerzapfen (15) bzw. dessen Längsachse (16) und dessen anderer (zweiter) Schenkel (18") konzentrisch zum Stützzapfen (22) bzw. dessen Längsachse (20) verläuft.

12. Förderer nach Anspruch 11, dadurch gekennzeichnet, daß die beiden jeweils rechtwinklig zu der betreffenden Längsachse (16 bzw. 20) verlaufenden Stirnseiten (26' bzw. 26") des Kippelementes (18) jeweils mit geringem Zwischenraum (27) einer parallelen Fläche (28' bzw. 28") des Tragelementes (2) bzw. des Stützteils (6) gegenüberliegen.

13. Förderer nach einem oder mehreren der Ansprüche 9 bis 12, insbesondere nach Anspruch 12, dadurch gekennzeichnet, daß das Kippelement (18) jeweils zum Tragelement (2) und zum Stützteil (6) abgedichtet ist.

14. Förderer nach einem oder mehreren der Ansprüche 9 bis 13, dadurch gekennzeichnet, daß das Kippelement (18) im Förderzustand mittels eines lösbaren Verriegelungsmittels (29) am Stützteil (6) verriegelt ist, und daß das Verriegelungsmittel (29) mittels eines an einer Abgabestation (10) angeordneten, gesteuert zu betätigenden Entriegelungsmittels zu entriegeln ist.

15. Förderer nach einem oder mehreren der Ansprüche 9 bis 14, insbesondere nach Anspruch 14, dadurch gekennzeichnet, daß das Kippelement (18) bei Betätigung durch ein an jeder Abgabestation (10) angeordnetes Betätigungsmittel gesteuert um die Längsachse (20) des Stützzapfens (22) zu drehen ist.

16. Förderer nach einem oder mehreren der Ansprüche 9 bis 15, dadurch gekennzeichnet, daß an dem Kippelement (18) wenigstens ein Hebel (30) angeordnet ist, der bei Betätigung durch ein Betätigungsmittel einer Abgabestation (10) unter Entriegelung des Verriegelungsmittels (19) um seine Anlenkstelle (31) zu schwenken ist und unter Drehung des Kippelementes (18) um die Längsachse (20) des Stützzapfens (22) zu drehen ist.

17. Förderer nach einem oder mehreren der vorhergehenden Ansprüche, dadurch gekennzeichnet, daß die Längsachse (16) des Lagerzapfens (15) so zum Tragelement (2) angeordnet ist, daß sie in Richtung der Längssymmetrieachse (19) der Tragfläche (2) zur Quersymmetrieachse der Tragfläche (3) versetzt ist.

18. Förderer nach einem oder mehreren der vorhergehenden Ansprüche, dadurch gekennzeichnet, daß der Lagerzapfen an einem Kippelement gelagert ist, welches seinerseits außerdem an einem von dem Stützteil hochstehenden Stützelement gelagert ist, dessen Längsachse abgewinkelt zur Längsachse des Lagerzapfens verläuft, und der beim Kippen des Tragelementes relativ zum Stützelement gesteuert schwenkbar ist.

19. Förderer nach einem oder mehreren der vorhergehenden Ansprüche, insbesondere nach Anspruch 18, dadurch gekennzeichnet, daß die einander zugekehrten Endabschnitte des Lagerzapfens (15) und des Stützelementes (34) nur über das Kippelement (18) miteinander verbunden sind.

20. Förderer nach einem oder mehreren der vorhergehenden Ansprüche, insbesondere nach Anspruch 19, dadurch gekennzeichnet daß das Stützteil (6) eine das Stützelement bildende Stützbuchse (34) aufweist, welche den unteren Endabschnitt (18") des Kippelementes (18) konzentrisch umgibt.

21. Förderer nach einem oder mehreren der vorhergehenden Ansprüche, insbesondere nach Anspruch 19 oder 20, dadurch gekennzeichnet, daß das Stützteil (6) in seitlicher Draufsicht im wesentlichen in Form eines E ausgebildet ist, dessen Steg um einen Winkel (a) zur Vertikalen gedreht ist, der gleich dem zwischen der Längsachse 16 des Lagerzapfens 15 und der Horizontalen eingeschlossenen Winkel (a) ist, wobei der Mittelschenkel (34) des Stützteils (6) die Lagerstelle für den unteren Endabschnitt (18") des Kippelementes (18) bildet, und die beiden Außenschenkel (35, 36) des Stützteils (6) jeweils mit dem Tragelement (2) verbunden sind.

22. Förderer nach Anspruch 20 und 21, dadurch gekennzeichnet, daß der die Lagerstelle für den unteren Endabschnitt (18") des Kippelementes (18) bildende Mittelschenkel des Stützteils (6) als Stützbuchse (34) ausgebildet ist.

23. Förderer nach Anspruch 21 oder 22, dadurch gekennzeichnet, daß die beiden Außenschenkel (35, 36) des Stützteils (6) zueinander fluchten, und daß die vertikale mittlere Symmetrieebene der beiden Außenschenkel (35, 36) des Stützteils (6) in der in Förderrichtung (9) verlaufenden vertikalen Symmetrieebene liegt.

24. Förderer nach Anspruch 23, dadurch gekennzeichnet, daß die beiden Außenschenkel (35, 36) des Stützteils (6) jeweils an ihrem oberen Endabschnitt eine Ausnehmung (37 bzw. 38) aufweisen, in welcher jeweils ein Führungsnocken (39 bzw. 40) der Stützeinrichtung (5) bzw. des Tragelementes (2) geführt ist.

25. Förderer nach Anspruch 24, dadurch gekennzeichnet, daß die Ausnehmungen (37 bzw. 38) der Außenschenkel (35 bzw. 36) des Stützteils (6) als Langlöcher ausgebildet sind, deren Längsachsen (41 bzw. 42) in der vertikalen Symmetrieebene liegen.

26. Förderer nach Anspruch 24 oder 25, insbesondere nach Anspruch 25, dadurch gekennzeichnet, daß die Führungsnocken (39 bzw. 40) als Rollen ausgebildet sind.

27. Förderer nach Anspruch 26, dadurch gekennzeichnet, daß die Führungsnocken (39 bzw. 40) einen elastischen Mantel aufweisen.

28. Förderer nach einem oder mehreren der Ansprüche 24 bis 27, dadurch gekennzeichnet, daß die Führungsnocken (39 bzw. 40) jeweils an einem Führungsnockenhalter (43 bzw. 44) angeordnet sind, der mit der Stützeinrichtung (5) bzw. dem Tragelement (2) verbunden ist; und daß die die Mittelachse der Führungsnocken (39 bzw. 40) bildenden Achsen (45 bzw. 46) der Führungsnocken (39, 40) zueinander fluchten.

29. Förderer nach Anspruch 28, dadurch gekennzeichnet, daß die Führungsnocken (45, 46) in der vertikalen Symmetrieebene liegen.

30. Förderer nach Anspruch 28 oder 29, dadurch gekennzeichnet, daß die Führungsnockenhalter (43 bzw. 44) jeweils als Scheibe (43) bzw. als Buchse (44) ausgebildet und mit einem Befestigungsabschnitt (49) der Stützeinrichtung (5) bzw. des Tragelementes (2) bzw. einem Befestigungsabschnitt (50) des Stützteils (6) bzw. dessen Stützbuchse (34) befestigt ist.

31. Förderer nach einem oder mehreren der vorhergehenden Ansprüche, dadurch gekennzeichnet, daß das Kippelement (18) jeweils in Längsrichtung der beiden Längsachsen (16, 20) unbeweglich angeordnet ist.

32. Förderer nach einem oder mehreren der vorhergehenden Ansprüche, insbesondere nach Anspruch 31, dadurch gekennzeichent, daß das Kippelement (18) als V-förmiger Rohrkörper ausgebildet ist, dessen einer Schenkel (18') konzentrisch zum Lagerzapfen (15) bzw. dessen Längsachse (16) angeordnet ist, und dessen anderer Schenkel (18") konzentrisch zur Längsachse (20) der Stützbuchse (34) verläuft.

33. Förderer nach Anspruch 32, dadurch gekennzeichnet, daß die beiden jeweils rechtwinklig zu der betreffenden Längsachse (16 bzw. 20) verlaufenden Stirnseiten (26' bzw. 26") des Kippelementes (18) jeweils einer im wesentlichen parallelen Fläche (28' bzw. 28") des Tragelementes (2) bzw. der Stützbuchse (34) gegenüberliegen.

34. Förderer nach einem oder mehreren der Ansprüche 31 bis 33, insbesondere nach Anspruch 33, dadurch gekennzeichnet, daß das Kippelement (18) jeweils zum Tragelement (2) und/oder zum Stützteil (6) bzw. dessen Stützbuchse (34) abgedichtet ist.

35. Förderer nach einem oder mehreren der vorhergehenden Ansprüche, dadurch gekennzeichnet, daß das Kippelement (18) im Förderzustand mittels eines lösbaren Verriegelungsmittels am Stützteil (6) verriegelt ist, und daß das Verriegelungsmittel mittels eines an einer Abgabestation (10) angeordneten, gesteuert zu betätigenden Entriegelungsmittels zu entriegeln ist.

36. Förderer nach einem oder mehreren der vorhergehenden Ansprüche, insbesondere nach Anspruch 35, dadurch gekennzeichnet, daß das Kippelement (18) bei Betätigung durch ein an jeder Abgabestation (10) angeordnetes Betätigungsmittel gesteuert um die Längsachse (20) der Stützbuchse (34) zu drehen ist.

37. Förderer nach einem oder mehreren der vorhergehenden Ansprüche, dadurch gekennzeichnet, daß an dem Kippelement (18) wenigstens ein Hebel (30) angeordnet ist, der bei Betätigung durch ein Betätigungsmittel mit einer Abgabestation (10) unter Entriegelung des Entriegelungsmittels um seine Anlenkstelle (31) zu schwenken ist und unter Drehung des Kippelementes (18) um die Längsachse (20) des buchsenförmigen Stützelementes (31) zu drehen ist.

38. Förderer nach Anspruch 37, dadurch gekennzeichnet, daß zwischen dem Hebel (30) und dem Kippelement (18) wenigstens eine Feder (51) angeordnet ist, die bei Auslenkung des Hebels (30) aus einer Verriegelungsstellung (Fig. 3) eine Rückstellkraft auf den Hebel (30) ausübt.

39. Förderer nach Anspruch 38, dadurch gekennzeichnet, daß die Feder (51) als Schraubenfeder ausgebildet ist und mit ihren Endabschnitten jeweils an einem entsprechenden Ansatz (52) des Kippelementes (18) bzw. einem Ansatz (53) des Hebels (30) gehalten ist.

40. Förderer nach einem oder mehreren der vorhergehenden Ansprüche, dadurch gekennzeichnet, daß die Längsachse (16) des Lagezapfens (15) so relativ zum Tragelement (2) angeordnet ist, daß sie in Richtung der Längssymmetrieachse (19) der Tragfläche (2) zur Quersymmetrieachse der Tragfläche (3) versetzt ist.
